# EUROPEAN PATENT APPLICATION

(11) **EP 4 748 342 A1**
(43) Date of publication of application: **27.05.2026**
(21) Application number: 25214782.2
(22) Date of filing: 11.11.2025
(51) Int. Cl.: A61C 8/00

(54) **IMPLANT STRUCTURE**

(30) Priority: 22.11.2024 KR 20240168939
(71) Applicant: Vatech mcis co., Ltd, Suwon-si, Gyeonggi-do (KR); Vatech Ewoo Holdings Co., Ltd., Hwaseong-si, Gyeonggi-do, 18449 (KR)
(72) Inventor: KIM, Dae Jun, 18449 Hwaseong-si (KR); YANG, Gi Uk, 18449 Hwaseong-si (KR); HONG, Ju Seop, 18449 Hwaseong-si (KR)
(74) Representative: Lorenz & Kollegen

(57) **Abstract**

Proposed is an implant structure. The implant includes an upper structure comprising a gingival portion and a prosthesis support and a lower structure provided integrally with the upper structure. The lower structure has a greater surface roughness than the upper structure.

## Description

### CROSS REFERENCE TO RELATED APPLICATION

The present application claims priority to Korean Patent Application No. 10-2024-0168939, filed November 22, 2024, the entire contents of which are incorporated herein for all purposes by this reference.

### BACKGROUND

### Technical Field

The present disclosure relates to an implant structure.

### Description of the Related Art

In dentistry, implant surgery refers to the procedure of implanting an artificial tooth. Implant surgery involves placing an implant, i.e., an artificial tooth formed from a biocompatible material, into the alveolar bone to replace a lost tooth and restore the function of the lost tooth.

Unlike conventional prosthetics or dentures which may damage surrounding teeth and bone over time, implants do not harm adjacent dental structures. Implants may function and appear like natural teeth and are resistant to decay, thereby being advantageously semi-permanently used. Furthermore, implants may restore single lost teeth, enhance the function of dentures for patients with partial or complete edentulism, and improve the aesthetics of dental prosthetic restoration. Moreover, implants may help stabilize the dentition by distributing excessive stress applied to the surrounding supporting bone tissue.

In general, an implant may include a fixture which is implanted as an artificial dental root and an abutment which is connected to the fixture to hold a prosthesis such as a crown. The fixture, the abutment, and the crown may be provided as separate components which are combined, or the fixture and the abutment may be provided as a single component to act as a lower structure and an upper structure, respectively, to which the prosthesis is attached. In another example, all of the fixture, the abutment, and the prosthesis may be provided as a single component.

### SUMMARY

An embodiment of the disclosure provides a hybrid surface treatment method to optimize surface characteristics according to different requirements of an upper structure and a lower structure.

An embodiment of the disclosure provides surface treatment optimized for the upper structure and the lower structure, respectively, to improve the performance and durability of an implant.

According to embodiments of the disclosure, an implant structure includes: an upper structure including a gingival portion and a prosthesis support; and a lower structure provided integrally with the upper structure, wherein the prosthesis support has a greater roughness than the gingival portion.

According to an embodiment, the lower structure may have a greater roughness than the gingival portion.

According to an embodiment, the lower structure may have a greater roughness than the prosthesis support.

According to an embodiment, the roughness Ra of the lower structure may range from 1.5 to 2.5 µm.

According to an embodiment, the roughness Ra of the prosthesis support may range from 0.3 to 0.6 µm.

According to an embodiment, the roughness Ra of the gingival portion may range from 0.01 to 0.03 µm.

According to an embodiment, wherein the gingival portion may be treated with acid.

According to an embodiment, the implant structure may include 82 to 84 wt% of ZrO₂, 7.25 to 7.75 wt% of Y₂O₃, 6.75 to 7.25 wt% of Nb₂O₅, 0.75 to 1.25wt% of Er₂O₃, and 0.75 to 1.25 wt% of CeO₂.

According to an embodiment, reliable attachment of the prosthesis may be ensured through specialized surface treatment of the prosthesis support of the upper structure.

According to an embodiment, the mirror polishing treatment of the gingival portion may maximize the effects of preventing plaque accumulation and coloring.

According to an embodiment, surface roughness treatment applied to the osseointegration portion of the lower structure may enhance the initial stability and long-term osseointegration of the implant.

According to an embodiment, applying optimized surface treatment methods to the respective specific portions may significantly improve the overall performance of the implant as well as patient satisfaction.

### BRIEF DESCRIPTION OF THE DRAWINGS

The above and other objectives, features, and other advantages of the disclosure will be more clearly understood from the following detailed description when taken in conjunction with the accompanying drawings, in which:
FIG. 1 illustrates a captured image of the surface of a prosthesis support;
FIG. 2 illustrates a captured image of the surface of a gingival portion;
FIG. 3 illustrates a captured image of the surface of a lower structure; and
FIG. 4 is a perspective view illustrating an implant structure.

### DETAILED DESCRIPTION

Hereinafter, implementations of the disclosure will be described in detail. However, these implementations are presented merely as examples, by which the disclosure is not limited. The disclosure is defined solely by the scope of the claims set forth below.

Unless otherwise specified herein, when a portion such as a layer, a film, a region, or a plate is described as being "on" another portion, it should be understood that the portion may be "directly on" the other portion or indirectly on the other portion via an intervening portion.

Unless otherwise specified herein, singular forms may include plural forms. Unless otherwise specified, "A or B" may refer to "including A, including B, or including A and B."

Methods and materials similar or equivalent to those described herein may be used in the practice or testing of the disclosure, but suitable methods and materials are described herein. Unless clearly stated otherwise in the context, singular forms include plural forms.

It will be understood herein that the terms "comprise", "include", "have", etc. when used in the specification, specify the presence of stated features, numbers, steps, operations, elements, parts, components, materials, and/or combinations thereof but do not preclude the presence or addition of one or more other features, integers, steps, operations, elements, parts, components, materials, and/or combinations thereof.

As used herein, the term "a combination thereof" indicates a mixture or combination of two or more components described. The combination thereof may refer to, for example, a mixture, a stack, a composite, a copolymer, an alloy, a blend, or a reaction product of constituents.

As used herein, the term "and/or" refers to including any and all combinations of one or more of the items described in relation thereto. The term "or" in this specification refers to "and/or".

Hereinafter, example embodiments will be described in more detail.

Implants require strong osseointegration and durability to be reliably fixed in the oral cavities of patients.

According to an embodiment of the disclosure, the zirconia implant structure may include an upper structure and a lower structure. The upper structure and the lower structure may be integrally provided. The integrated upper and lower structures serve to support the prosthesis, thereby requiring different surface treatment techniques for respective regions.

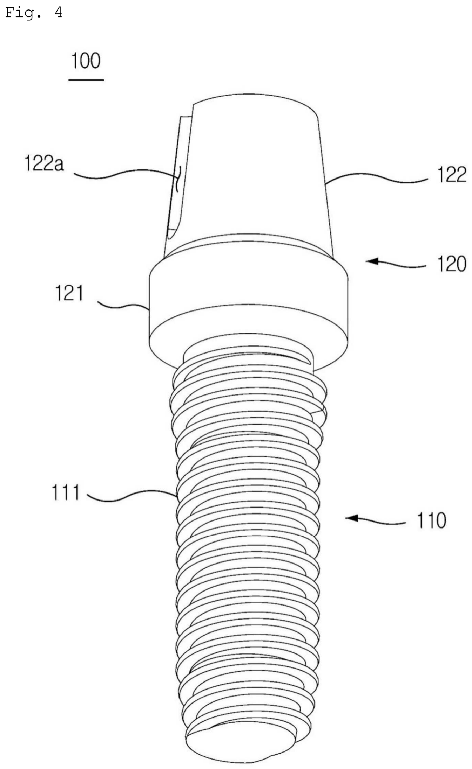

Referring to FIG. 4, an implant structure 100 according to an embodiment of the disclosure may be configured to extend in a vertical direction.

The implant structure 100 may be configured such that one side is implanted into the alveolar bone where a tooth is missing, with a prosthesis fixedly fitted to the other side. Due to this configuration, the implant structure 100 may help restore the function of the missing tooth. The implant structure 100 may be formed from various materials. For example, the implant structure 100 may be formed from a zirconia material.

The implant structure 100 may include a lower structure 110. The lower structure 110 may be implanted into the alveolar bone as an artificial root. The lower structure 110 may be formed as a cylinder extending in the vertical direction. The lower structure 110 may have a threaded portion 111 formed on the outer circumference. The lower structure 110 may be engaged with and implanted into the alveolar bone through the threaded portion 111. The diameter of the lower structure 110 may progressively decrease in one direction. For example, the diameter of the lower structure 110 may progressively decrease from the upper side to the lower side.

The implant structure 100 may include an upper structure 120. The upper structure 120 may serve as an abutment for fixing the prosthesis. The upper structure 120 may be connected to one end of the lower structure 110. For example, the upper structure 120 may be connected directly and integrally to the upper end of the lower structure 110. Accordingly, the implant structure 100 may be formed as one piece including the lower structure 110 and the upper structure 120.

The upper structure 120 may include a gingival portion 121. The gingival portion 121 may be connected to the upper portion of the lower structure 110. The lower end of the gingival portion 121 may be integrally provided on the upper end of the lower structure 110. The gingival portion 121 may be provided as a cylinder having a larger diameter than the lower structure 110. The bottom surface and the top surface of the gingival portion 121 may each be formed as a tapered inclined surface.

The upper structure 120 may include a prosthesis support 122. The prosthesis support 122 may be positioned on the upper portion of the gingival portion 121. The lower end of the prosthesis support 122 may have a stepped portion integrally provided on the upper end of the gingival portion 121. The prosthesis support 122 may have a larger diameter than the lower structure 110 and a smaller diameter than the gingival portion 121. The prosthesis support 122 may be provided in the shape of a frustum. The outer peripheral surface of the prosthesis support 122 may be formed as a tapered inclined surface. The outer peripheral surface of the prosthesis support 122 may be inclined such that the upper end is narrower than the lower end, i.e., the diameter thereof gradually increases from the upper side to the lower side.

Because the implant structure 100 is configured as one piece, the lower structure 110, the gingival portion 121, and the prosthesis support 122 may be manufactured as a unitary structure.

The upper structure 120 may be provided with a rotation-limiting groove 122a. The rotation stop recess 122a may be provided on the outer peripheral surface of the upper structure 120. For example, the rotation stop recess 122a may be provided on the outer peripheral surface of the prosthesis support 122. The rotation stop recess 122a may be provided concavely inward from the outer surface of the prosthesis support 122. The rotation stop recess 122a may be formed elongated in the vertical direction. The rotation stop recess 122a may be inclined at the same inclination angle as the outer peripheral surface of the prosthesis support 122. The inner surface of the rotation stop recess 122a may be formed rounded. For example, the inner surface of the rotation stop recess 122a may be formed in an arc shape when viewed in cross-section.

### Surface Treatment of Upper Structure

According to an embodiment of the disclosure, the surface characteristics of the upper structure and the lower structure may be adjusted differently to meet respective distinct functional requirements of the upper and lower structures.

The upper structure may include a prosthesis support and a gingival portion. The prosthesis support is a part which is bonded with an implant prosthesis. To enhance adhesion to the prosthesis support, surface treatment may be applied to increase surface roughness. Surface treatment for the prosthesis support may correspond to, for example, sandblasting. Surface treatment for the prosthesis support increases the surface roughness of prosthesis support to maximize the bonding surface area, thereby ensuring the stability of the prosthesis.

Sandblasting treatment may forcefully spray small abrasive particles, such as sand or silica, to the surface of the prosthesis support using high-pressure compressed air, thereby controlling the surface roughness. For example, the surface roughness of the prosthesis support may be controlled by adjusting the pressure of compressed air, the abrasive material, the size and shape of the nozzle, the spray distance, the angle, the spray time, and the like.

The gingival portion may correspond to the portion which contacts the gums. To prevent metal coloring on the gingival portion caused by plaque accumulation and the use of a scaler, mirror polishing (or barrel polishing) may be applied to the gingival portion, thereby enabling the gingival portion to maintain a smooth surface.

Surface polishing or barrel polishing may be performed under the following conditions by placing a polishing stone, a polishing agent, an implant structure, and distilled water into a barrel polisher.

**[Table 1]**

| | Polishing Stone | Time | RPM |
|---|---|---|---|
| First Barrel | Alumina Rod (Φ1.5 * L 5mm) | 10 to 20 Hr | 100 to 200 |
| Second Barrel | | 1 to 5 Hr | 100 to 200 |

After mirror polishing or barrel polishing of the entire implant structure 100, sandblasting treatment may be performed to the prosthesis support and lower structure under the following conditions by wrapping the gingival portion with rubber packing.

**[Table 2]**

| Powder | Alumina |
|---|---|
| Size | 50 to 150 um |
| Air Pressure | 5 to 10 kg/cm2 |
| Nozzle Distance | 20 to 60 mm |
| Time | 30 to 60 sec |

### Surface Treatment of Lower Structure

The lower structure is the portion where the implant integrates with the bone. To promote osseointegration, sandblasting and acid treatment may be performed on the lower structure to increase the surface roughness. These surface treatments may maximize osseointegration by expanding the contact area between the lower structure and bone cells.

Acid treatment may be performed by covering the polished gingival portion and the sandblasted prosthesis support with protective caps and exposing only the lower structure. The acid treatment conditions may be as shown in the table below.

**[Table 3]**

| Acid Solution | 4 to 9% HF |
|---|---|
| Temperature | 60 to 80°C |
| Time | 10 to 20 min |

The brightness levels at various positions of the implant structure may be as shown in the table below.

**[Table 4]**

| Item | Upper Structure | | Lower Structure |
|---|---|---|---|
| | Prosthesis Support | Gingival Portion | |
| Surface Roughness (Ra) | 0.3 to 0.6 µm | 0.01 to 0.03 µm | 1.5 to 2.5 µm |
| Surface Roughness (Sa) | 1.0 to 1.5 µm | 0.02 to 0.05 µm | 2.0 to 3.0 µm |

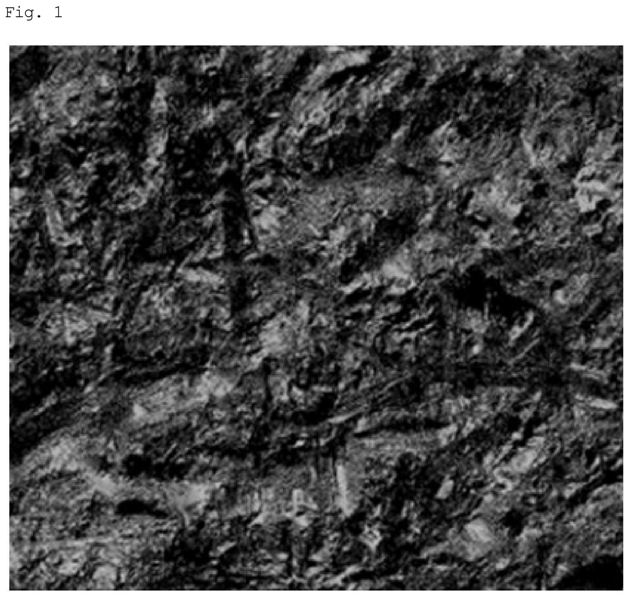

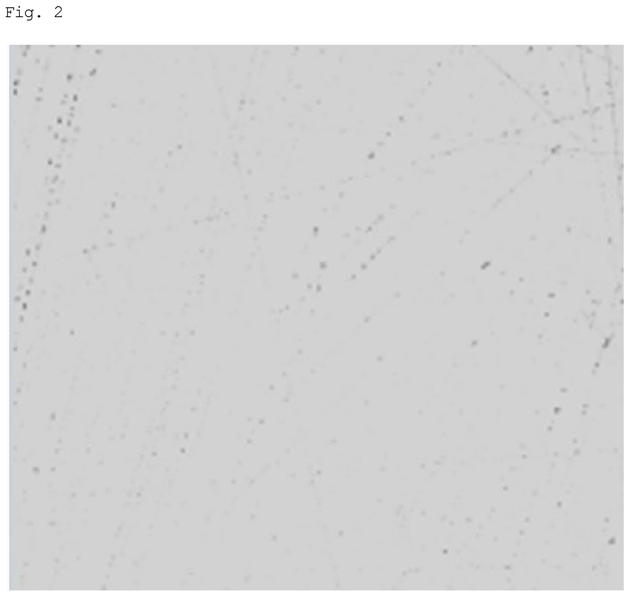

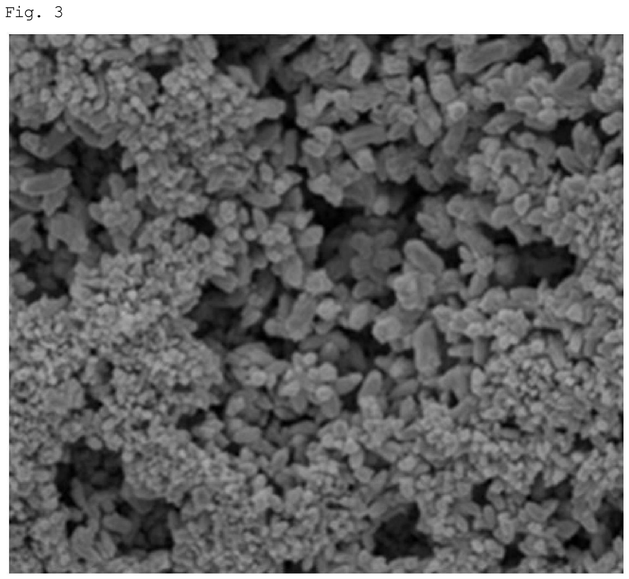

FIG. 1 illustrates a captured image of the surface of a prosthesis support, FIG. 2 illustrates a captured image of the surface of a gingival portion, and FIG. 3 illustrates a captured image of the surface of a lower structure. The surface roughness of the respective portions is as shown in the table above. The component information of the implant structure included in the corresponding images is as shown in the following table.

**[Table 5]**

| Composition | ZrO₂ | Y2O₃ | Nb₂O₅ | Er₂O₃ | CeO₂ |
|---|---|---|---|---|---|
| Content (wt%) | 82 to 84 | 7.25 to 7.75 | 6.75 to 7.25 | 0.75 to 1.25 | 0.75 to 1.25 |

Although the disclosure has been described in detail with reference to the example embodiments, the disclosure is not limited to these embodiments. Various modifications are possible within the scope of the claims, the detailed description of the disclosure, and the accompanying drawings, and such modifications should also fall within the scope of the disclosure.

## Claims

1. An implant structure comprising:
an upper structure(120) comprising a gingival portion(121) and a prosthesis support(122); and
a lower structure (110) provided integrally with the upper structure(120),
**characterized in that** the lower structure (110) has a greater surface roughness than the upper structure(120).

2. The implant structure of claim 1, wherein the prosthesis support(122) has a greater surface roughness than the gingival portion (121).

3. The implant structure of claim 1, wherein the surface roughness increases in the order of the gingival portion(121), the prosthesis support(122), and the lower structure(110).

4. The implant structure of claim 3, wherein the surface roughness of the lower structure(110) ranges from 1.5 to 2.5 µm.

5. The implant structure of claim 4, wherein the surface roughness of the prosthesis support(122) ranges from 0.3 to 0.6 µm.

6. The implant structure of claim 4, wherein the surface roughness of the gingival portion(121) ranges from 0.01 to 0.03 µm.

7. The implant structure of claim 6, wherein the gingival portion(121) is treated with acid.

8. The implant structure of claim 1, comprising 82 to 84 wt% of ZrO₂, 7.25 to 7.75 wt% of Y₂O₃, 6.75 to 7.25 wt% of Nb₂O₅, 0.75 to 1.25wt% of Er₂O₃, and 0.75 to 1.25 wt% of CeO₂.
